Europäisches Patentamt

European Patent Office

Office européen des brevets

(19)

(11) Publication number: **0 029 473**
**B1**

# EUROPEAN PATENT SPECIFICATION

(12)

(45) Date of publication of patent specification: **02.11.83**

(51) Int. Cl.³: **A 23 L 2/26, A 23 L 2/38**

(21) Application number: **79302683.2**

(22) Date of filing: **23.11.79**

(54) **Dry clouding agent and dry beverage mix including it.**

(30) Priority: **00.00.00**

(43) Date of publication of application:
**03.06.81 Bulletin 81/22**

(45) Publication of the grant of the patent:
**02.11.83 Bulletin 83/44**

(84) Designated Contracting States:
**AT BE CH DE FR GB IT LU NL SE**

(56) References cited:
**DE - A - 2 910 265**
**FR - A - 2 282 235**
**GB - A - 1 279 769**
**US - A - 3 023 106**
**US - A - 3 658 552**
**US - A - 4 093 750**

(73) Proprietor: **GENERAL FOODS CORPORATION**
**250 North Street**
**White Plains,**
**N.Y. 10625 (US)**

(72) Inventor: **Serafino, James Michael**
**260 Stillwater Avenue**
**Stamford, Connecticut 06902 (US)**
Inventor: **Yadlowsky, Slawko (NMN)**
**308 North Thirteenth Avenue**
**Manville, New Jersey 08835 (US)**
Inventor: **Witzeman, John Stephen**
**134 Montague Drive**
**Portage, Michigan 49081 (US)**

(74) Representative: **Baillie, Iain Cameron, et al**
**c/o Ladas & Parry Isartorplatz 5**
**D-8000 München 2 (DE)**

## Dry clouding agent and beverage mix including it

The present invention relates to components for mixes for making beverages, especially fruit flavored beverages wherein a desired quality is opacity.

In the art of the formulation of dry mix fruit juice beverages, there is a continuing effort being made to duplicate a counterpart natural fruit juice as closely as possible. The imitation beverage must have the mouth-feel, opacity, color and flavor characteristics of a natural juice. These desirable characteristics must be evident from the time of preparation of the aqueous beverage from the dry mix to the time of consumption. In many cases the beverage is not consumed for periods of time up to 48 hours subsequent to preparation. While stability after reconstitution is critical, it is equally important that the powderous dry beverage mix be storage stable for extended periods of time (i.e., in excess of 90 days) under adverse conditions (i.e., temperature 38°C (100°F) and relatively humidity 90%).

An attempt at achieving the desired property of opacity or cloud inherent in natural fruit juice is described in U.S.—A—No. 3,023,106. Therein is described a dried emulsion incorporating a plastic fat which is added to a dry beverage mix. The term "plastic fat" is described to cover a fat which is semisolid at room temperature, that is, a product which is a mixture of fats and oils at temperatures in the order of 16°C (60°F). The plastic fat may be compounded by any one of a number of means such as by hardening through hydrogenation of vegetable oils or may comprise a blend of such fats and oils. Typically coconut oil may be hydrogenated to give a semi-solid material having a Wiley melting point of 37°C (98°F), a capillary melting point of 40°C (104°F), an iodine value of 5.2, a saponification number of approximately 253 and a solids content index of 43% at 20°C. To this material is added 6% stearin to yield a partially solidified fat having a Wiley melting point of 44°C (111°F), a capillary melting point of 47°C (116°F), an iodine value of 2.2, a saponification number of approximately 254 and a solids content index of from 48—50% solids at a temperature of 20°C.

Another attempt at producing a clouding agent was set out in U.S.—A—No. 3,658,522. The concept of a plastic fat emulsion system of Common was improved upon by providing for the incorporation of one or more inorganic whitening pigments, typically titanium dioxide, in a clouding system comprising a plastic fat and a hydrophilic colloidal material. Carlson typically spray dries a solution of gum Arabic, hydrogenated coconut oil and titanium dioxide to obtain a dry, flowable, powderous clouding agent which is subsequently incorporated in a dry beverage mix.

A major drawback of prior cloud systems relates to their inclusion of the plastic fat itself in the cloud system. Several detrimental effects are manifested due to the fat and result ultimately in problems of clumping of the dry mix and insolubility of the mix when reconstitution is attempted. First, the oil may be poorly fixed, that is an excess of free oil will be present in the cloud system. Second, in the blending process when the cloud is mixed with the other ingredients of the dry beverage mix ingredients, considerable mechanical work is performed (typically in 907 kg (2000 pound) capacity ribbon blenders). The mechanical attrition and grinding will liberate oil from its fixative agent. A third undesirable effect is caused by temperature which may be due to both mechanical shear during mixing and ambient conditions. A fourth effect is provided by excessive moisture which may be due to excessively humid ambient conditions and the addition of liquid color to the dry mix. Thus, there are various influences which tend to liberate oil during processing. Since the oil is water insoluble, aqueous, reconstitution is incomplete.

Another problem associated with the use of oil in a clouding agent is off-taste. The oxidated rancidity and alkaline hydrolysis of the oil result in a undesirable soapy taste. This type of problem is further compounded in that discovery of the off-taste in many instances is not made until after the product has been in the stream of commerce for a considerable period of time.

In view of the foregoing, it would be highly desirable if a simple method were devised whereby a cloud system for dry beverage mixes could be obtained which does not contain fat.

It is an object of the present invention to provide a clouding agent for dry beverage mixes and particularly imitation fruit juice mixes which have the opacity and mouth-feel of natural juices. Typically these imitation fruit juices have a pH of below about 4.5. It is another object of this invention that the cloud system be storage stable for extended periods of time. Still another object is to provide a clouding agent which is readily soluble in cold water. Generally this invention allows the use of titanium dioxide in a cloud system which is free from oil.

These and other objects are accomplished according to the present invention by preparing a dry clouding agent for dry beverage mixes by co-drying an aqueous mixture containing a major amount of solubilized malto dextrin with minor amounts of xanthan gum and dispersed titanium dioxide.

The term opacity as used in this invention relates to the level of light transmittance of an aqueous solution. A laboratory instrument such as a Bausch and Lomb Spec 20 (TM) is used to measure such light transmittance levels.

The clouding agent of this invention is prepared by dispersing and co-drying solubilized malto dextrin, xanthan gum and dispersed titanium dioxide to produce a dry powder which manifests a clouding effect when incorporated in an artificial beverage.

Various malto dextrins (hydrolyzed cereal solids) which are starch hydrolysates produced by converting pure refined corn starch into nutritive saccharides through the use of acids or specific enzymes. The carbohydrate composition of malto dextrin is arranged to yield a DE (dextrose equivalent) of less than 20. They are typically bland in flavor and without appreciable sweetness. Preferably, the malto dextrin as used in the instant invention will have a dextrose equivalent of between 10 and 20. As used herein, the malto dextrin sold under the trademark Fro-Dex[TM] 15 by the American Maize-Products Company has been found most preferable. It is a white free-flowing powder extremely bland in taste with little or no sweetness. Additionally, it has a quality of contributing a slight opacity to the clouding composition.

Typical chemical and physical data of Fro-Dex[TM] 15

| | |
|---|---|
| % Moisture | 4.5 |
| Dextrose equivalent | 18 |
| $SO_2$ (M.W.) | 40 ppm |
| pH (1:1) | 4.5 |
| Weight per cu. meter approx. | 577 kg |
| (Weight per cu. ft. approx. | 36 lbs |
| Carbohydrate composition (approx. %D.B.) | |
| Monosaccharides | 3 |
| Disaccharides | 2 |
| Trisaccharides | 2 |
| Tetrasaccharides | 2 |
| Pentasaccharides & higher | 91 |

| | | Mesh size U.S. Standard screens | |
|---|---|---|---|
| Screen analysis (average %) | | in. | mm. |
| On 40 | nil | 0.0165 | 0.42 |
| On 100 | .4 | 0.0059 | 0.149 |
| On 200 | 14.0 | 0.0029 | 0.074 |
| Thru 200 | 85.6 | 0.0017 | 0.044 |

The xanthan gum as used in this invention is a high molecular weight natural carbohydrate or more specifically polysaccharide. Xanthan gum defines the exocellular biopolysaccharide which is produced in a pure culture fermentation process by the microorganism xanthomonas campestris.

An important functional quality of the xanthan gum is its ability to control aqueous fluid rheology. Water solutions of xanthan gum are extremely pseudoplastic; when shear stress is applied, viscosity is reduced in proportion to the amount of shear once the yield point has been exceeded. Upon release of the shear, total viscosity recovery occurs almost instantaneously. Another attribute of xanthan gum that makes it useful as a suspension stabilizer is that it not only has a yield value but also a viscosity which is almost independent of temperature and pH. A particular xanthan gum found most useful in the practice of this invention is sold under the trademark Keltrol[TM] F available from Merck & Company.

Typical physical properties Keltrol[TM] F

| | |
|---|---|
| Physical state | Dry, cream-colored powder |
| Moisture content | 11% |
| Ash | 9% |
| Color | 70 |
| Specific gravity | 1.5 |
| Bulk density kg/m³ | 836.2 |
| Bulk density (lbs/cu ft) | 52.2 |
| Browning temperature, °C | 165 |
| Charring temperature, °C | 240 |
| Ashing temperature, °C | 470 |
| As a 1% solution (distilled water): | |
| Heat of solution (J/gsoln) | 0.335 |
| Heat of solution (cal/g soln) | 0.080 |
| Refractive index (20°C) | 1.3338 |
| pH | 7.0 |
| Surface tension (N/cm) | $75 \times 10^{-5}$ N/cm |
| Surface tension (dynes/cm) | 75 |
| Freezing point, °C | 0.0 |
| 1% Viscosity (60 rmp, Brookfield LVF) (with 1% electrolyte added) | 1400 mPas |
| Mesh size | 200 U.S. Standard sieve |

Titanium dioxide as used herein is preferably a purified inorganic white, named by the 1971 Colour Index, pigment white 6, C.I. 77891. It is available from H. Kohnstamm & Company and typically has the following characteristics.

Titanium dioxide technical data

| | |
|---|---|
| Crystal type | Anatase |
| Specific gravity | 3.9 |
| Density kg/m³ | 3242.9 |
| (Pounds per solid gallon | 32.5) |
| 1 kg bulks, liters | .31 |
| (1 Pound bulks, gals. | .0308) |
| Minimum TiO₂ | 99% |
| Spatula water absorption | 30 kg water/100 kg pigment (30 lbs water/100 lbs pigment) |
| Spatula oil absorption | 20—22 kg oil/100 kg pigment (20—22 lbs oil/100 lbs pigment) |
| Average particle diameter | 0.3 μm |
| Screen test | 99% Through 325 mesh screen (U.S. Standard sieve) |
| | 100% Through 200 mesh screen (U.S. Standard sieve) |
| | (CTFA Method C 6-1, wet screening) (ASTM D-185-45) |

The cloud composition of the instant invention is preferably added to constituent ingredients necessary to formulate a dry beverage mix. Therefore, unless otherwise indicated all percentages herein referred to will be in relation to the total dry mix (as in the instant example) composition. Thus, the malto dextrin may be present in the range of 0.5% to 5.0% by weight of the total dry mix composition. Preferably the range will be 1.5% to 2.0%. The xanthan gum will be present in the range between .01% and 0.1% by weight of the dry mix composition. Preferably the xanthan will be present in the amount of .015% to .035% by weight of the dry weight mix composition. The titanium dioxide will be present in amounts between .01% and 0.1% by weight of the dry mix composition, and preferably between .025% and .075%. Preferably the titanium dioxide will be finely divided say in 0.1 to 0.7 mμ particle size.

A number of unexpected results arise from the combination of the three components of the instant clouding composition. Most importantly it has been found that it is critical that the titanium dioxide be added to an aqueous solution of malto dextrin and xanthan gum and the resultant suspension be co-dried. The combination of each component by mixing in its dry form does not have utility. The titanium dioxide immediately begins to precipitate when the mix is put in a beverage. Likewise, co-drying titanium dioxide with either malto dextrin or xanthan gum separately does not work. The titanium dioxide again immediately precipitates when used in a beverage. Surprisingly the co-dried combination permits a cloud which is useful in a beverage for periods of at least 24 hours and preferably at least 48 hours when the beverage is stored at 10°C (50°F).

Another unexpected result of the instant invention relates to the amount of xanthan gum necessary to contribute the desired mouth-feel (viscosity) in an artificial fruit beverage. Conventionally, carboxy methyl cellulose is used in the amount of 0.46% by weight of the dry beverage mix composition to impart the desired effect. Direct replacement of carboxy methyl cellulose has been found to require the xanthan gum in the amount of about 0.13% by weight of the dry mix. It has been found that on a comparative basis when xanthan gum is contained within the composition of the instant invention that only about one-third the amount by weight of the dry mix of xanthan gum is needed for equivalency of the desired viscosity/mouth-feel characteristics. Another unexpected result is that two particular levels of malto dextrin have been identified as being most effective. Those levels are 1.75% and 3.00% of malto dextrin by weight of the dry beverage mix. Thus, while levels of malto dextrin of between 0.5 and 5.0% by weight of the dry mix are effective, the unexpected benefits displayed by this invention are most evident at the two specific levels identified.

In the preparation of the product of this invention, it is preferable to use a vessel which has provision for mixing under high shear. Additionally, the malto dextrin and xanthan gum will solubilize more quickly if the aqueous system is heated preferably to about 65.6°C (150°F). The higher temperatures may be used, but in no case should they exceed the boiling point of the composition. The resultant solution or suspension is then maintained at an elevated temperature in preparation for drying. Most advantageous due to process cost and volume considerations is the utilization of a spray dryer to evaporate the water from the aqueous mixture and thus obtain a powderous clouding agent from the co-dried ingredients. Those skilled in the art will recognize that other methods of drying may be employed such as freeze drying, vacuum drying, etc. Typically in spray drying, the product will be fed to the drying tower by means of a pump such as a Manton-Gaulin under working pressures of between 3450 kPa and 20700 kPa (500 psi and 3,000 psi). Such pressures inflict additional shearing force on the mixture and further serve to homogenize and reduce the particle size of the product.

The dried cloud ingredients are typically mixed with other beverage materials such as tartaric acid, citric acid or other food acids, sugars such as sucrose, dextrose, fructose and the like, artificial sweeteners, suitable coloring agents such as orange coloring, cherry coloring, grape coloring and the like, fruit flavors such as orange, grape, lemon, lime and the like and other art recognized beverage additives.

The invention is more fully described but not limited by the following examples.

Example 1

To prepare the cloud according to the preferred embodiment of this invention, the following procedure is followed.

To a high shear planetary-type mixture is added a preblended dry mix of 435 kg (958.9 pounds) of malto dextrin sold under the trade mark Fro-Dex$^{(TM)}$ 15 available from American Maize-Products Company and 6.2 kg (13.7 pounds) of xanthan gum sold under the trade mark Keltrol$^{(TM)}$ F available from Merck and Company and 1320 l. (290 gallons) of water with constant mixing. To the resulting solution is added 12.4 kg (27.4) pounds of food grade titanium dioxide. During the mixing the temperature of the solution is elevated to about 66°C (150°F). Next the mixer speed is increased to maximum speed and shear and is maintained for a 15 minute period. The product is then transferred to a separate holding tank preparatory to spray drying. The mixture enters the spray drying tower by means of passage through a two stage Manton Gauling positive displacement pump. The first stage and second stage are operated at 13780 kPa (2000 psi) pressure and 20670 kPa (3000 psi) pressure respectively. The solution enters the upper portion of the drying tower through a series of spray nozzles. The inlet air temperature of the drying tower is about 204°C (400°F). The exit air temperature in the lower portion of the tower is about 88°C (190°F). The product exiting the bottom of the tower is a dry flowable powder having a moisture content below 5%.

Example 2

A fruit flavored beverage mix is prepared employing the cloud prepared as in Example 1 and in accordance with the following formulation:

Beverage mix A

| Ingredient | Percent |
| --- | --- |
| Sugar | 88.522 |
| Citric acid | 5.318 |
| Cloud* | 1.825 |
| Flavor and flavor enhancers | 1.143 |
| Monocalcium phosphate | 1.137 |
| Potassium citrate | 0.780 |
| Dry calcium phosphate | 0.664 |
| Vitamin C | 0.511 |
| Carboxymethylcellulose | 0.460 |
| Vitamin A | 0.036 |
| Color | 0.028 |
| | 100.000 |

*Cloud

| | |
| --- | --- |
| Malto dextrin (Fro-Dex 15$^{(TM)}$) | 95.89 |
| Xanthan gum (Keltrol$^{(TM)}$) | 1.37 |
| Titanium dioxide | 2.74 |
| | 100.000 |

For comparison, a conventional fruit flavored beverage mix is prepared in accordance with the following formulation:

# 0 029 473

Beverage mix B

| Ingredient | Percent |
| --- | --- |
| Sugar | 88.309 |
| Citric acid | 5.381 |
| Cloud* | 1.574 |
| Monocalcium phosphate | 1.137 |
| Potassium citrate | 0.780 |
| Tricalcium phosphate | 0.664 |
| Vitamin C | 0.511 |
| Flavor and flavor enhancers | 1.143 |
| Carboxymethylcellulose | 0.500 |
| Vitamin A | 0.036 |
| Color | 0.028 |
| | 100.000 |

*Cloud

| | |
| --- | --- |
| Modified starch | 76.440 |
| Hydrogenated coconut oil | 19.600 |
| Titanium dioxide | 1.960 |
| Tricalcium phosphate | 2.000 |
| | 100.000 |

Thirty-three grams of Beverage Mix B is reconstituted in 0.23 kg (8 ounces) of water and produced a beverage with an opacity reading of 60 on a Bausch Lomb Spec 20 opacity meter.

Thirty-three grams of the above Beverage Mix A is reconstituted in 0.23 kg (8 ounces) of water. The opacity is the same as that of the Beverage Mix B. Additionally the body and mouth feel of the beverage of A and that of B are judged equivalent by an expert panel.

The product of Beverage Mix B after being reconstituted in 9°C (50°F) water and held at that temperature for 24 hours displayed precipitation of the cloud system. Titanium dioxide came out of solution and settled at the bottom of the sample flask with an attendant reduction in opacity. The product of Beverage Mix A has no apparent precipitation or change in opacity after 24 hours at 9°C (50°F). Additionally the product of Beverage Mix A is readily dispersible in cold water and does not display the clumping or streaking problems associated with beverage mixes which have oil.

## Claims for the contracting states: BE CH DE FR GB IT LU NL SE

1. A dry clouding agent for addition to fruit flavored dry beverage mix which mix comprises sugar, food acid, flavor and color characterised in that said dry clouding agent comprises a major amount of malto dextrin and a minor amount of xanthan gum and titanium dioxide and has been obtained by co-drying an aqueous dispersion comprised of, on a dry basis, a major amount of the malto dextrin and a minor amount of xanthan gum and titanium dioxide.

2. A fruit flavored dry beverage mix comprising sugar, food acid, flavor and color which contains a clouding agent according to claim 1.

3. A fruit flavored dry beverage mix according to claim 2 wherein malto dextrin comprises 0.5% to 5.0% by weight of the total dry beverage mix composition.

4. A fruit flavored dry beverage mix according to claim 3 wherein malto dextrin comprises 1.5% to 2.0% by weight of the total dry beverage mix composition.

5. A fruit flavored dry beverage mix according to any one of claims 2 to 4 wherein xanthan gum comprises 0.01% to 0.1% by weight of the total dry beverage mix composition.

6. A fruit flavored dry beverage mix according to claim 5 wherein xanthan gum comprises between 0.015% to 0.035% by weight of the total dry beverage mix composition.

7. A fruit flavored dry beverage mix according to any one of claims 2 to 6 wherein titanium dioxide comprises 0.01% to 0.1% by weight of the total dry beverage mix composition.

8. A fruit flavored dry beverage mix according to claim 7 wherein the titanium dioxide comprises 0.025% to 0.075% by weight of the total dry beverage mix composition.

9. A fruit flavored dry beverage mix according to any one of claims 2 to 8 wherein the titanium dioxide is of particle size 0.1 to 0.7 micrometers.

10. A fruit flavored dry beverage mix according to any one of claims 2 to 9 wherein the food acid is present in the reconstituted beverage in an amount sufficient to produce a pH of less than 4.5.

**0 029 473**

**Claims for the contracting state: AT**

1. A method for preparing a dry clouding agent for addition to fruit flavored dry beverage mix which mix comprises sugar, food acid, flavor and color characterised in that titanium dioxide is added to an aqueous solution of malto dextrin and xanthan gum and the resultant suspension is co-dried, the dried clouding agent product comprising a major amount of the malto dextrin and minor amount of the xanthan gum and titanium dioxide.

2. A method according to claim 1 wherein the clouding agent is added to components for a dry beverage mix comprising sugar, food acid, flavor and color.

3. A method according to claim 2 wherein the malto dextrin comprises 0.5% to 5% by weight of the total dry beverage mix composition.

4. A method according to claim 3 wherein the malto dextrin comprises 1.5% to 2% by weight of the total dry beverage mix composition.

5. A method according to any one of claims 2 to 4 wherein xanthan gum comprises 0.01% to 0.1% by weight of the total dry beverage mix composition.

6. A method according to claim 5 wherein xanthan gum comprises between 0.015% and 0.035% by weight of the total dry beverage mix composition.

7. A method according to any one of claims 2 to 6 wherein titanium dioxide comprises 0.01% to 0.1% by weight of the total dry beverage mix composition.

8. A method according to claim 7 wherein the titanium dioxide comprises 0.025% to 0.075% by weight of the total dry beverage mix composition.

9. A method according to any one of claims 2 to 8 wherein the food acid present in the amount wherein in the reconstituted beverage prepared from the dry beverage mix the amount is sufficient to produce a pH of less than 4.5.

**Patentansprüche für die Vertragsstaaten BE CH DE FR GB IT LU NL SE**

1. Trockenes Trübungsmittel zum Zusatz zu einer Getränke-Trockenmischung mit Fruchtgeschmack, die Zucker, für die Verwendung in Lebensmitteln geeignete Säure, Geschmackstoff und Farbstoff enthält, dadurch gekennzeichnet, daß das trockene Trübungsmittel einen größeren Anteil Malzdextrin und einen kleineren Anteil Xanthanharz und Titandioxid enthält und durch Trocknen einer wäßrigen Dispersion erhalten worden ist, die auf Trockenbasis einen größeren Anteil Malzdextrin und einen kleineren Anteil Xanthanharz und Titandioxid gemeinsam enthält.

2. Getränke-Trockenmischung mit Fruchtgeschmack, die Zucker, für die Verwendung in Lebensmitteln geeignete Säure, Geschmackstoff und Farbstoff enthält, dadurch gekennzeichnet, daß sie ein Trübungsmittel nach Anspruch 1 enthält.

3. Getränke-Trockenmischung mit Fruchtgeschmack nach Anspruch 2, dadurch gekennzeichnet, daß die Getränke-Trockenmischung 0,5 bis 5,0 Gew.-% Malzdextrin enthält.

4. Getränke-Trockenmischung mit Fruchtgeschmack nach Anspruch 3, dadurch gekennzeichnet, daß die Getränke-Trockenmischung 1,5 bis 2,0 Gew.% Malzdextrin enthält.

5. Getränke-Trockenmischung mit Fruchtgeschmack nach einem der Ansprüche 2 bis 4, dadurch gekennzeichnet, daß die Getränke-Trockenmischung 0,01 bis 0,1 Gew.% Xanthanharz enthält.

6. Getränke-Trockenmischung mit Fruchtgeschmack nach Anspruch 5, dadurch gekennzeichnet, daß die Getränke-Trockenmischung 0,015 bis 0,035 Gew.% Xanthanharz enthält.

7. Getränke-Trockenmischung mit Fruchtgeschmack nach einem der Ansprüche 2 bis 6, dadurch gekennzeichnet, daß die Getränke-Trockenmischung 0,01 bis 0,1 Gew.% Titandioxid enthält.

8. Getränke-Trockenmischung mti Fruchtgeschmack nach Anspruch 7, dadurch gekennzeichnet, daß die Getränke-Trockenmischung 0,025 bis 0,075 Gew.% Titandioxid enthält.

9. Getränke-Trockenmischung mit Fruchtgeschmack nach einem der Ansprüche 2 bis 8, dadurch gekennzeichnet, daß das Titandioxid eine Korngröße von 0,1 bis 0,7 $\mu$m hat.

10. Getränke-Trockenmischung mit Fruchtgeschmack nach einem der Ansprüche 2 bis 9, dadurch gekennzeichnet, daß das hergestellte Getränk so viel für die Verwendung in Lebensmitteln geeignete Säure enthält, daß es einen pH-Wert unter 4,5 besitzt.

**Patentansprüche für den Vertragsstaat AT**

1. Verfahren zum Erzeugen eines trockenen Trübungsmittels zum Zusatz zu einer Getränke-Trockenmischung mit Fruchtgeschmack, die Zucker, für die Verwendung in Lebensmitteln geeignete Säure, Geschmacksstoff und Farbstoff enthält, dadurch gekennzeichnet, daß einer wässerigen Lösung von Malzdextrin und Xanthanharz Titandioxid zugesetzt wird und die so erhaltene Suspension getrocknet wird, wobei das durch Trocknen erhaltene Trübungsmittel zu einem größeren Teil aus dem Malzdextrin und zu einem kleineren Teil aus dem Xanthanharz und dem Titandioxid besteht.

2. Verfahren nach Anspruch 1, dadurch gekennzeichnet, daß das Trübungsmittel zu Bestandteilen einer Getränke-Trockenmischung zugesetzt wird, die Zucker, für die Verwendung in Lebensmitteln geeignete Säure, Geschmacksstoff und Farbstoff enthält.

3. Verfahren nach Anspruch 2, dadurch gekennzeichnet, daß die Getränke-Trockenmischung 0,5 bis 5 Gew.% Malzdextrin enthält.

4. Verfahren nach Anspruch 2, dadurch gekennzeichnet, daß die Getränke-Trockenmischung 1,5 bis 2 Gew.% Malzdextrin enthält.

5. Verfahren nach einem der Ansprüche 2 bis 4, dadurch gekennzeichnet, daß die Getränke-Trockenmischung 0,01 bis 1 Gew.% Xanthanharz enthält.

6. Verfahren nach Anspruch 5, dadurch gekennzeichnet, daß die Getränke-Trockenmischung 0,015 bis 0,035 Gew.% Xanthanharz enthält.

7. Verfahren nach einem der Ansprüche 2 bis 6, dadurch gekennzeichnet, daß die Getränke-Trockenmischung 0,01 bis 0,1 Gew.% Titandioxid enthält.

8. Verfahren nach Anspruch 7, dadurch gekennzeichnet, daß die Getränke-Trockenmischung 0,025 bis 0,075 Gew.% Titandioxid enthält.

9. Verfahren nach einem der Ansprüche 2 bis 8, dadurch gekennzeichnet, daß die Getränke-Trockenmischung die für die Verwendung in Lebensmitteln geeignete Säure in einer solchen Menge enthält, daß sie in dem unter Verwendung der Getränke-Trockenmischung hergestellten Getränk in einer solchen Menge enthalten ist, daß ein pH-Wert unter 4,5 erhalten wird.

**Revendications pour les Etats contractants BE CH DE FR GB IT LU NL SE**

1. Agent opacifiant sec pour addition à un mélange sec pour boisson parfumée au fruit comprenant un sucre, un acide alimentaire, un agent de saveur et un colorant, caractérisé en ce que cet agent opacifiant sec comprend une proportion majeure de malto-dextrine et une proportion mineure de gomme xanthane et de bioxyde de titane et en ce qu'il a été obtenu par co-séchage d'une dispersion aqueuse constituée, sur une base sèche, d'une proportion majeure de malto-dextrine et d'une proportion mineure de gomme xanthane et de bioxyde de titane.

2. Mélange sec pour boisson parfumé au fruit comprenant un sucre, un acide alimentaire, un agent de saveur et un colorant, caractérisé en ce qu'il contient un agent opacifiant selon la revendication 1.

3. Mélange sec pour boisson parfumé au fruit selon la revendication 2, caractérisé en ce que la malto-dextrine constitue de 0,5% à 5,0% en poids de la composition totale du mélange sec pour boisson.

4. Mélange sec pour boisson parfumé au fruit selon la revendication 3, caractérisé en ce que la malto-dextrine constitue de 1,5% à 2,0% en poids de la composition totale du mélange sec pour boisson.

5. Mélange sec pour boisson parfumé au fruit selon l'une quelconque des revendications 2 à 4, caractérisé en ce que la gomme xanthane constitue de 0,01% à 0,1% en poids de la composition totale du mélange sec pour boisson.

6. Mélange sec pour boisson parfumé au fruit selon la revendication 5, caractérisé en ce que la gomme xanthane constitue entre 0,015% et 0,035% en poids de la composition totale du mélange sec pour boisson.

7. Mélange sec pour boisson parfumé au fruit selon l'une quelconque des revendications 2 à 6, caractérisé en ce que le bioxyde de titane constitue de 0,01% à 0,1% en poids de la composition totale du mélange sec pour boisson.

8. Mélange sec pour boisson parfumé au fruit selon la revendication 7, caractérisé en ce que le bioxyde de titane constitue de 0,025% à 0,075% en poids de la composition totale du mélange sec pour boisson.

9. Mélange sec pour boisson parfumé au fruit selon l'une quelconque des revendications 2 à 8, caractérisé en ce que le bioxyde de titane a une taille de particule de 0,1 à 0,7 $\mu$m.

10. Mélange sec pour boisson parfumé au fruit selon l'une quelconque des revendications 2 à 9, caractérisé en ce que l'acide alimentaire est présent dans la boisson reconstituée en quantité suffisante pour produire un pH inférieur à 4,5.

**Revendications pour l'Etat contractant AT**

1. Procédé pour préparer un agent opacifiant sec pour addition à un mélange sec pour boisson parfumé au fruit, lequel mélange comprend du sucre, un acide alimentaire, un agent de saveur et un colorant, caractérisé en ce que du bioxyde de titane est ajouté à une solution aqueuse de malto-dextrine et de gomme xanthane et en ce que la suspension obtenue est co-séchée, l'agent opacifiant séché produit comprenant une proportion majeure de malto-dextrine et une proportion mineure de gomme xanthane et de bioxyde de titane.

2. Procédé selon la revendication 1, selon lequel l'agent opacifiant est ajouté au constituant d'un mélange sec pour boisson comprenant du sucre, un acide alimentaire, un agent de saveur et un colorant.

3. Procédé selon la revendication 2 dans lequel la malto-dextrine constitue de 0,5% à 5% en poids de la composition totale du mélange sec pour boisson.

4. Procédé selon la revendication 3, dans lequel la malto-dextrine constitue de 1,5% à 2% en poids de la composition totale du mélange sec pour boisson.

5. Procédé selon l'une quelconque des revendications 2 à 4, dans lequel la gomme xanthane constitue de 0,01% à 0,1% en poids de la composition totale du mélange sec pour boisson.

6. Procédé selon la revendication 5, dans lequel la gomme xanthane constitue entre 0,015% et 0,035% en poids de la composition totale du mélange sec pour boisson.

7. Procédé selon l'une quelconque des revendications 2 à 6, dans lequel le bioxyde de titane constitue de 0,01% à 0,1% en poids de la composition totale du mélange sec pour boisson.

8. Procédé selon la revendication 7, caractérisé en ce que le bioxyde de titane constitue de 0,025% à 0,075% en poids de la composition totale du mélange sec pour boisson.

9. Procédé selon l'une quelconque des revendications 2 à 8, dans lequel l'acide alimentaire est présent dans la boisson reconstituée préparée à partir du mélange sec pour boisson, en quantité suffisante pour produire un pH inférieur à 4,5.